(19) Europäisches Patentamt
European Patent Office
Office européen des brevets

(11) EP 2 541 498 B1

(12) EUROPEAN PATENT SPECIFICATION

(45) Date of publication and mention
of the grant of the patent:
**06.09.2017 Bulletin 2017/36**

(51) Int Cl.:
***G06T 7/80*** (2017.01)

(21) Application number: **11172195.7**

(22) Date of filing: **30.06.2011**

(54) **Method of determining extrinsic parameters of a vehicle vision system and vehicle vision system**

Verfahren zur Bestimmung der extrinsischen Parameter eines Farzeugsichtsystems und Fahrzeugsichtsystem

Procédé pour définir les paramètres extrinsèques d'un système de vision de véhicule et système de vision de véhicule

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**02.01.2013 Bulletin 2013/01**

(73) Proprietor: **Harman Becker Automotive Systems GmbH**
**76307 Karlsbad (DE)**

(72) Inventors:
• **Natroshvili, Koba**
**76337 Waldbronn (DE)**
• **Vacek, Stefan**
**76135 Karlsruhe (DE)**

(74) Representative: **Bertsch, Florian Oliver**
**Kraus & Weisert**
**Patentanwälte PartGmbB**
**Thomas-Wimmer-Ring 15**
**80539 München (DE)**

(56) References cited:
• **Stefan Vacek ET AL: "Road-marking analysis for autonomous vehicle guidance", Online Proceedings of the 3rd European Conference on Mobile Robots, September 19 - 21, 2007, 19 September 2007 (2007-09-19), pages 1-6, XP55013390, Freiburg, Germany Retrieved from the Internet: URL:http://ecmr07.informatik.uni-freiburg. de/proceedings/ECMR07_0034.pdf [retrieved on 2011-11-29]**
• **DOURET J ET AL: "A volumetric multi-cameras method dedicated to road traffic monitoring", INTELLIGENT VEHICLES SYMPOSIUM, 2004 IEEE PARMA, ITALY JUNE 14-17, 2004, PISCATAWAY, NJ, USA,IEEE, 14 June 2004 (2004-06-14), pages 442-446, XP010727511, DOI: 10.1109/IVS.2004.1336424 ISBN: 978-0-7803-8310-4**
• **KUNFENG WANG ET AL: "Research on lane-marking line based camera calibration", VEHICULAR ELECTRONICS AND SAFETY, 2007. ICVES. IEEE INTERNATIONAL CONFERENCE ON, IEEE, PISCATAWAY, NJ, USA, 13 December 2007 (2007-12-13), pages 1-6, XP031233372, ISBN: 978-1-4244-1265-5**

**Description**

Field of the Invention

The invention relates to a method of determining extrinsic parameters of a vehicle vision system and to a vehicle vision system. The invention relates in particular to such a method and vision system which allows extrinsic parameters to be determined using image processing.

Background

The integration of one or plural image sensors in vehicular systems has become more and more widespread. Such image sensors may be used as components of a driver assist system in which the image sensors capture images of the vehicle environment. The captured images may be processed to perform object recognition and/or may be displayed, possibly after processing, to a user. Automatic warning and assist functions may be performed to warn the driver of potentially dangerous situations or to actively control operation of a vehicle by actuating the break or similar. Image sensors may also be employed as rear view or side view cameras which help the driver with parking the vehicle or other critical operations.

S. Vacek et al., "Road-marking analysis for autonomous vehicle guidance", Proceedings of the 3rd European Conference on Mobile Robots, EMCR 2007, September 19-21, 2007, Freiburg, Germany, which serves as basis of the preamble of the independent claims, discloses techniques for extracting additional information about lanes from the types of lane boundaries.

J. Douret and R. Benosman, "A volumetric multi-cameras method dedicated to road traffic monitoring", 2004 IEEE Intelligent Vehicles Symposium, 2004, Parma, Italy, June 14-17, 2004, Piscataway, NJ, USA, IEEE, pages 442-446, discloses a calibration method which uses the road as a constant geometry.

K. Wang et al., "Research on lane-marking line based camera calibration", IEEE International Conference on Vehicular Electronics and Safety, 2007, Piscataway, NJ, USA, December 13, 2007, pages 1-6, discloses a camera calibration method which uses lane markings with known lane width and either camera height or a length of a land marking parallel to the road.

With the use of image sensors in vehicular applications becoming increasingly popular, the complexity and time required to calibrate the vehicle vision system become an important issue. Calibrating a vehicle vision system requires extrinsic and intrinsic parameters to be known. While intrinsic parameters may frequently remain invariant over time, this may not always apply to extrinsic parameters. The location of a camera on the vehicle and the three-dimensional orientation of the camera are exemplary for such extrinsic parameters. The orientation of the camera may change over time, for example due to vibrations during continued operation of the vehicle which may cause the orientation of the camera to vary. Such changes in camera orientation may require the vision system to be recalibrated, in order to avoid potentially hazardous operating conditions.

One approach to determine extrinsic parameters consists in positioning one or plural dedicated markers at pre-defined positions relative to the vehicle, determining the position of the marker in the image plane of the camera, and determining parameters of a linear mapping which maps the object coordinates in the vehicle coordinate system onto the object coordinates in the image plane. Such an approach is based on a mapping between three-dimensional coordinates of a point in the world coordinate system and two-dimensional coordinates in the image plane. Such an approach may require the marker(s) to be positioned relative to the vehicle with a high precision, which may require the re-calibration to be performed at a professional workshop. This imposes constraints on how frequently the extrinsic parameters can be determined.

There is a continued need in the art for a method of determining extrinsic parameters of a vehicle vision system and for a vehicle vision system in which the calibration does not require the dedicated markers to be used for the calibration procedure. There is also a need in the art for such a method and such a vehicle vision system which allows extrinsic parameters to be determined during driving operation of the vehicle.

Summary

This need is addressed by a method and a vehicle vision system as recited in the independent claims. The dependent claims describe embodiments.

According to an aspect, a method of determining extrinsic parameters of a vehicle vision system is provided. The vehicle vision system comprises a camera installed in a vehicle. At least one image of a road captured by the camera is processed to identify plural road lane markings in the at least one image, the plural road lane markings extending parallel to each other in a road plane. For each road lane marking of the plural road lane markings, a first set of parameters and a second set of parameters is determined. The first set of parameters defines an orientation and position of a line along which the road lane marking extends in an image plane of the at least one image. The second set of parameters defines an orientation and position of a line along which the road lane marking extends in the road plane. The second set of parameters is determined based on information on a spacing of the road lane markings in the road plane. A linear transformation is identified which, for each one of the plural road lane markings, defines a mapping between the first set of parameters and the second set of parameters. The extrinsic parameters are established based on the identified linear transformation, with the established extrinsic parameters defining at least an orientation of the camera.

In the method, a linear mapping is determined between first and second parameter sets which define lines in the image plane and road plane, respectively. By determining the extrinsic parameters based on the mapping between a second parameter set defining a line in the road plane and a first parameter set defining a line in the image plane, robustness of the calibration procedure is attained. Road lane markings serve as a marking for defining such lines to determine the linear transformation. Road lane markings are available as markings during driving operation of the vehicle, without requiring dedicated markings to be positioned at pre-defined locations relative to the vehicle.

The first set of parameters respectively includes plural parameters which may be organized in an n-tuple with n>1. The second set of parameters respectively includes plural parameters which may also be organized in an n-tuple.

With the linear mapping being determined between first and second parameter sets which define lines in the image plane and road plane, respectively, the determination of extrinsic parameters is insensitive to the position of the vehicle along the longitudinal direction of the road along which the vehicle is travelling. It is not required to position the vehicle at a specific location relative to start and end points of a marking in the longitudinal direction of the road, because it is the line as such which is used in the calibration, not individual points.

For road lane markings, information on the location of the road lane markings in the transverse direction of the road can be determined using a map database which is conventionally available in vehicles, for example as part of a vehicle navigation system. Such a map database may include explicit information on lane widths. The map database may also include information on functional road classes which can be associated with road lane widths. This information may be used in determining extrinsic parameters of the vehicle vision system, without requiring dedicated measurements to be made to determine the locations of the road lane marking upon calibration.

The first set of parameters may comprise coefficients of a bilinear equation in the image plane coordinates, which defines the line along which the respective road lane marking extends in the image plane. The second set of parameters may comprise coefficients of a bilinear equation in the road plane coordinates, which defines the line along which the respective road lane marking extends in the road plane.

Matrix elements of a homography matrix may be determined to identify the linear transformation. The matrix elements of a matrix which describes a linear mapping between the coefficients of a bilinear equation which defines the line along which the respective road lane marking extends in the image plane and the coefficients of another bilinear equation which defines the line along which the respective road lane marking extends in the road plane are matrix elements of the homography matrix, which defines a mapping between points in a world coordinate system of the vehicle and the image plane.

The matrix elements of the homography matrix may be determined such that

$$H^T \vec{p'}_i \qquad\qquad (1)$$

approximates $\vec{p}_i$ for every i = 1, ..., M, wherein i denotes an integer identifier for a road lane marking, M denotes a total count of the plural road lane markings, H denotes the homography matrix having three rows and three columns, the superscript T denotes the matrix transpose, the vector $\vec{p'}_i$ denotes a 3-tuple of the first set of parameters identified for the $i^{th}$ road lane marking, and the vector $\vec{p}_i$ denotes a 3-tuple of the second set of parameters identified for the $i^{th}$ road lane marking. This allows the homography matrix to be determined. Various criteria and techniques may be used to ensure that $H^T \vec{p'}_i$ approximates $\vec{p}_i$ for every i = 1, ..., M, depending on the number of unknown extrinsic parameters on which the homography matrix H depends and the count M of road lane markings. For illustration, if the number of unknown extrinsic parameters on which H depends is equal to 2·M, $H^T \vec{p'}_i = \vec{p}_i$ may be enforced. If the number of unknown extrinsic parameters on which H depends is less than 2·M, an over-determined set of equations results. A wide variety of conventional techniques, such as least square approximation, may be used to determine the matrix elements of H in this case.

Determining the first set of parameters may respectively include determining parameter values $a'_i$, $b'_i$ and $c'_i$ such that the line along which the road lane marking extends in the image plane is defined by

$$a'_i \cdot x' + b'_i \cdot y' + c'_i = 0 \quad , \qquad\qquad (2)$$

wherein i denotes an integer road lane marking identifier and x' and y' denote coordinates in the image plane. The bilinear equation (2) defines a line in the image plane.

Determining the second set of parameters may respectively include determining parameter values $a_i$, $b_i$, and $c_i$ such that the line along which the road lane marking extends in the road plane is defined by

$$a_i \cdot x + b_i \cdot y + c_i = 0, \tag{3}$$

wherein x and y denote coordinates in the road plane. The bilinear equation (3) defines a line in the image plane.

The matrix elements of the homography matrix may be determined based on the values of

$$N \left[ H^T \begin{pmatrix} a'_i \\ b'_i \\ c'_i \end{pmatrix} - \begin{pmatrix} a_i \\ b_i \\ c_i \end{pmatrix} \right] \tag{4}$$

for all i=1, ..., M, wherein N[·] denotes a vector norm and M denotes a total count of the plural road lane markings used in the calibration. The vector norm N[·] may be any norm, such as $L_2$ or another $L_p$ norm. Based on the expressions of Equation (4) for the various road lane markings, the matrix elements of the homography matrix may be determined in a numerically robust way. The matrix elements of the homography matrix may be determined such that the sum over the expression of Equation (4) over i,

$$\sum_{i=1}^{M} N \left[ H^T \begin{pmatrix} a'_i \\ b'_i \\ c'_i \end{pmatrix} - \begin{pmatrix} a_i \\ b_i \\ c_i \end{pmatrix} \right] \tag{5}$$

is minimized. Alternatively, the matrix elements of the homography matrix may be determined such that the sum of Equation (5) is less than a threshold. For increased robustness, the count M of road lane markings used in the method may be selected to be greater than the number of unknown extrinsic parameters in the homography matrix divided by two. While the homography matrix H having three rows and three columns has nine matrix elements, the number of unknown extrinsic parameters is less than or equal to six. If only the orientation of the camera is unknown, it is sufficient to determine three coordinates defining the orientation of a camera axis relative to the vehicle.

The matrix elements of the homography matrix may be determined such that

$$\sum_{i=1}^{M} \left\| H^T \begin{pmatrix} a'_i \\ b'_i \\ c'_i \end{pmatrix} - \begin{pmatrix} a_i \\ b_i \\ c_i \end{pmatrix} \right\|^2 \tag{6}$$

is minimized. A homography matrix H which minimizes the sum of Equation (6) may be found in a numerically efficient way. For increased robustness, the count M may be selected to be greater than the number of unknown extrinsic parameters in the homography matrix divided by two.

The matrix elements of the homography matrix may be determined such that, for every i=1, ..., M,

$$H^T \begin{pmatrix} a'_i \\ b'_i \\ c'_i \end{pmatrix} = \begin{pmatrix} a_i \\ b_i \\ c_i \end{pmatrix}. \tag{7}$$

If the number of unknown extrinsic parameters on which H depends is equal to M/2, the condition of Equation (7) allows the extrinsic parameters to be efficiently determined.

When the second set of parameters is determined according to Equation (3), one of the parameter values $a_i$

or $b_i$ may respectively be set equal to zero and a quotient of $c_i$ and the other one of the parameter values $a_i$ or $b_i$ may be set to have a value which is determined based on the information on the spacing of the road lane markings. The offset of the road lane markings in a world coordinate system of the vehicle is determined by the spacing of road lane markings. This allows the second set of parameters to be determined using information on the spacing.

For each one of the road lane markings, the quotient of $c_i$ and the other one of the parameter values $a_i$ or $b_i$ may be set equal to

$$(2 \cdot k(i) + 1) \cdot l/2 + s \ . \qquad (8)$$

Here, k(i) denotes an integer number which depends on the road lane marking identifier, *l* denotes a road lane width, and *s* denotes a value independent on the road lane marking identifier. The value *s* is an offset of the vehicle from a road lane center. The value *s* may be estimated from the captured at least one image. The value *s* may also be set equal to zero to account of the fact that a vehicle is typically driving in the center of a road lane. Based on Equation (8), the lines along which road lane markings extend in the road plane may be parameterized. For illustration, the road lane markings which delimit the lane on which the vehicle is driving may be parameterized by setting k(i) equal to 0 and to -1, respectively. If the longitudinal direction of the vehicle is defined to be the x-axis, the parameter values $a_i$ is equal to 0 and $c_i/b_i$ is given by Equation (8). If the longitudinal direction of the vehicle is defined to be the y-axis, the parameter values $b_i$ is equal to 0 and $c_i/a_i$ is given by Equation (8).

The plural road lane markings may include at least two road lane markings which extend parallel to each other in the road plane. This allows at least the three coordinates defining the orientation of the camera to be determined.

The plural road lane markings may include at least three road lane markings which extend parallel to each other in the road plane. This allows the three coordinates defining the orientation of the camera to be determined with higher robustness. If the position coordinates of the camera in the vehicle reference system are unknown, the position coordinates may also be determined.

A count M of the plural road lane markings used in the method and a count $M_e$ of extrinsic parameters which are to be determined may fulfill

$$M_e \leq 2 \cdot M. \qquad (9)$$

Thereby, the road lane markings which are identified and used in the method may be selected such that all unknown extrinsic parameters may be determined. The count M of the plural road lane markings and the count $M_e$ of extrinsic parameters which are to be determined may be set such that $M_e = 2 \cdot M$.

The identified plural road lane markings do not need to be simultaneously visible in an image. For illustration, only one or two road lane markings may be visible in an image captured by the camera, and at least one other road lane marking may be visible in another image captured by the camera. The various steps described herein may still be applied in such a scenario to determine the extrinsic parameters of the vehicle system. The calibration is thus robust against obstacles positioned in a section of the field of view of the camera.

The information on the spacing of road lane markings may be a fixed value stored in a memory. For illustration, in various countries, road lanes have a characteristic width which may be pre-determined by legal regulations. For illustration, road lanes in Germany may have a characteristic width of 3,6 meters. Such information may be used to determine the second set of parameters.

Information on the spacing of road lane markings may also be determined based on a map database. A vehicle position may be determined. Information on a road lane width may be retrieved from the map database using the determined vehicle position.

For enhanced robustness, an averaging procedure may be performed over plural images when determining the first set of parameters. For at least one road lane marking, a line along which the road lane marking extends may respectively be determined for each one of plural images of the road captured by the camera. Parameters which describe the line, for example according to Equation (2), may be determined for each image. The coefficients of the bilinear equation determined for the individual images may be averaged to define the first set of parameters used in any one Equations (4)-(7). Alternatively, matrix elements of the homography matrix may be determined individually for each one of the images, and the resulting extrinsic parameters or matrix elements of the homography matrix may be averaged.

The method of determining extrinsic parameters may be performed by a processing unit installed in the vehicle. The method of determining extrinsic parameters may be performed while the vehicle is driving along the road.

According to another aspect, a method of processing images captured by a camera of a vehicle vision system is provided. Extrinsic parameters of the vehicle vision system are determined in a calibration procedure, using a method of any one aspect or embodiment. In subsequent operation, images captured by the camera may be processed based on the determined extrinsic parameters. The processing of the images based on the determined extrinsic parameters may include any one or any combination of: determining parameters for visually outputting captured images via a display; determining locations at which graphical markings are to be overlaid on a captured image when the captured image is output via a display; processing the image for driver assist functions.

The calibration procedure may be initiated based on a user command. The calibration procedure may be initiated automatically, for example after pre-determined time intervals or when a change in extrinsic parameters of the vehicle vision system is automatically detected.

According to another aspect, a vehicle vision system is provided. The vehicle vision system includes a camera having an electro-optical component to capture images; and a processing unit. The processing unit is configured to process image data received from the camera. The processing unit is configured to process at least one image of a road captured by the camera to identify plural road lane markings in the at least one image, the plural road lane markings extending parallel to each other in a road plane. The processing unit is configured to respectively determine, for each road lane marking of the identified plural road lane markings, a first set of parameters and a second set of parameters. The first set of parameters defines an orientation and position of a line along which the road lane marking extends in an image plane of the at least one image. The second set of parameters defines an orientation and position of a line along which the road lane marking extends in the road plane. The processing unit is configured to determine the second set of parameters based on information on a spacing of the road lane markings in the road plane. The processing unit is configured to identify a linear transformation which, for each one of the plural road lane markings, defines a mapping between the first set of parameters and the second set of parameters. The processing unit is configured to establish the extrinsic parameters based on the identified linear transformation, the established extrinsic parameters defining at least an orientation of the camera.

The vehicle vision system is configured such that extrinsic parameters may be determined based on parameters defining lines. Robust determination of extrinsic parameters is thereby attained, without requiring locations of dedicated markings to be known relative to the vehicle in the vehicle longitudinal direction. The extrinsic parameters may be determined while the vehicle is driving along a road.

The processing unit may be configured to perform the method of determining extrinsic parameters of the vehicle vision system according to any one aspect or embodiment.

The vehicle vision system may include an output device. The image processing unit may be configured to use the determined extrinsic parameters of the vehicle vision system determined during a calibration procedure when outputting information based on images captured by the camera.

According to another aspect, a vehicle having a vehicle vision system according to any one aspect or embodiment is provided.

Embodiments may be used in vehicle vision systems for driver assist functions, such as rear view systems or surround view systems, without being limited thereto.

Brief Description of the Drawings

Embodiments will be described in more detail with reference to the accompanying drawings:

Fig. 1 is a schematic view of a vehicle equipped with a vehicle vision system and positioned on a road having road lane markings.

Fig. 2 is a schematic block diagram of a driver assist system including a vehicle vision system.

Figs. 3-5 are schematic views of images captured using a camera of a vehicle vision system.

Fig. 6 is a bird view of a road with a vehicle positioned thereon.

Fig. 7 is a flow chart of a method of determining extrinsic parameters of a vehicle vision system.

Fig. 8 is a bird view of another road with a vehicle positioned thereon.

Fig. 9 is a flow chart of a procedure which may be used in the method of Fig. 7.

Fig. 10 is a flow chart of a method performed by a processing unit of a vehicle vision system.

Detailed description

Throughout the description, identical or similar reference numerals refer to identical or similar components. While some embodiments will be described in specific contexts, embodiments are not limited to these specific contexts. Terms such as "forward", "front", "rearward", "rear", or "side" as used in the context of the vehicle vision system relate to the vehicle reference frame. I.e., the "forward" direction is the direction visible to the driver through the windshield, etc.

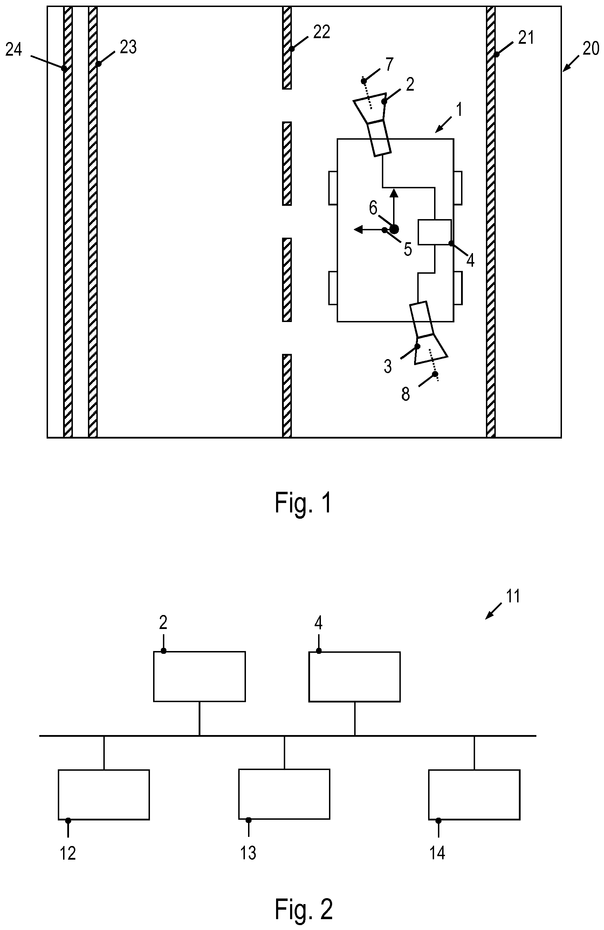

Fig. 1 is a schematic view showing a vehicle 1 positioned on a road 20. The vehicle 1 includes a vehicle vision system.

The vehicle vision system comprises a camera 2. The vehicle vision system may include one additional camera 3 or plural additional cameras. At least one of the cameras 2, 3 of the vehicle vision system is arranged such that the captured images show the road 20 on which the vehicle 1 is located in at least a section of the captured image. The vehicle vision system includes a processing device 4. The processing device 4 is coupled to an electro-optical component of the camera 2, 3 of the vehicle vision system and is configured to process image data received from the electro-optical sensor. For illustration, each camera 2, 3 may include a CCD sensor or another electro-optical sensor to convert optical images into image data. The processing device 4 may include one or plural processors which are configured to execute program code to determine extrinsic parameters of the vehicle vision system according to any one of the methods described herein.

The extrinsic parameters of the vehicle vision system include the position and orientation of the camera 2 in a vehicle coordinate system 5. The extrinsic parameters of the vehicle vision system may also include the position and orientation of one or plural other cameras 3 in the vehicle coordinate system 5. The position of a camera in the world coordinate system 5 of the vehicle may be defined by the three coordinates of a characteristic point of the camera relative to an origin 6 of the world coordinate system of the vehicle. The origin 6 may be located at a center of the vehicle 1 in the directions parallel to the ground plane of the vehicle, and at a height which corresponds to the ground plane. The characteristic point defining the position of the camera may be a center of the electro-optical sensor or the point at which an optical axis intersects an optical component of the camera. The orientation of the camera may be defined by the orientation of a characteristic axis of the camera relative to the vehicle coordinate system 5. The axis may be an optical axis of the respective camera. The orientation may be defined by three angles or any other equivalent description of an orientation in space. The axis 7 of the camera 2 and the axis 8 of the camera 3 are illustrated in Fig. 1.

The vehicle vision system is configured such that at least the orientation of a camera, such as camera 2, may be automatically determined in a calibration procedure. The processing unit 4 is configured to use road lane markings 21-23 which extend in parallel on the road 20 as markings. The translational invariance along the longitudinal direction of the road allows the extrinsic parameters to be determined without having to position the vehicle at a specific known position relative to start or endpoints of road lane markings. There may be additional road lane markings 24 which do not need to be taken into consideration when determining the extrinsic parameters.

In order to determine extrinsic parameters of camera 2, the processing unit 4 is configured to identify lines in an image plane of the camera along which the road lane markings extend in the image plane. The processing unit 4 is configured to determine, for each one of plural road lane markings, respectively a first set of parameters associated with the respective line. The first set of parameters may be a 3-tuple of coefficients of a bilinear equation in the image plane coordinates which defines the respective line in the image plane.

The processing unit 4 may be configured to determine, for each one of plural road lane markings, respectively a second set of parameters which define a line along which the road lane marking extends in the road plane. The second set of parameters may be a 3-tuple of coefficients of a bilinear equation in the road plane coordinates which defines the respective line in the road plane.

The processing unit 4 may be configured to determine elements of a homography matrix having three rows and three columns, which defines a mapping between the first set of parameters and the second set of parameters to determine at least an orientation of the respective camera 2.

In some implementation, the processing unit 4 may be configured to additionally determine the position of the respective camera 2.

The processing unit 4 may be configured to perform the above processing for plural cameras of the vehicle vision system.

When the extrinsic parameters of the vehicle vision system are determined based on parameters which define the orientation and position offset of lines in the image plane and of corresponding lines in the road plane, a robust determination of extrinsic parameters is possible. Road lane markings on road segments which are straight over at least a significant section of the field of view of the camera are generally and widely available during driving operation of the vehicle. The calibration may be performed selectively when the processing unit 4 determines that the vehicle is driving on a road having known road lane widths. Such a determination may be made based on a current location of the vehicle and based on whether a road lane width is stored in a map database or whether the road lane width can be determined from other information available for the road, such as a functional road class (FRC) of the road.

The vehicle vision system of the vehicle 1 may be comprised by or may interact with a driver assist system. The extrinsic parameters established for the vehicle vision system may be used when processing images captured by the camera(s) of the vehicle vision system.

Fig. 2 is a schematic block diagram of a driver assist system 11. The driver assist system 11 may be installed in a vehicle. The driver assist system 11 includes a vehicle vision system, which includes the camera 2 and the processing unit 4.

The driver assist system 11 may include additional components such as a map database 12 stored in a storage device, a position determining unit 13, and an optical output interface 14. The processing unit 4 may retrieve information on a current vehicle location from the position determining unit 13. The position determining unit 13 may be a GPS, NAVSTAT-GPS, Galileo or other positioning unit. Based on this information, the processing unit 4 may access the map database 12 to determine information on a road lane width for the road segment on which the vehicle is located. The processing unit 4 may use this information in determining the extrinsic parameters of the vehicle vision system.

The processing unit 4 may be coupled to the optical output interface 14. After extrinsic parameters of the vehicle vision system have been determined, the processing unit 4 may control the outputting of optical information via the optical output interface 14 based on the determined extrinsic parameters.

Methods of determining the extrinsic parameters will be described in more detail below. The methods may be performed by the processing unit 4 of the vehicle vision system. While determining extrinsic parameters will be described in the context of one camera, the methods may be applied in parallel or sequentially to plural cameras of a vehicle vision system.

When the camera includes optical components which give rise to non-linear image distortions, such as fish-eye distortions or other non-linear radial or cylindrical distortions, the distortions may be corrected using known intrinsic parameters of the camera. For the following description, it is assumed that the captured images do not include non-linear distortions. A reference to a "captured image" made herein does thus not preclude that the image has already undergone some pre-processing to correct non-linear distortions.

The optical mapping between spatial coordinates of a world coordinate system of the vehicle and image points in an image plane of a camera of the vehicle vision system may be described by a camera matrix. When homogeneous coordinates are used, the camera matrix may be represented as a matrix having three rows and four columns. The mapping between spatial coordinates, such as spatial coordinates in a vehicle reference frame, and image points in the image plane can be represented as

$$\begin{pmatrix} x' \\ y' \\ w' \end{pmatrix} = H_{3\times4} \begin{pmatrix} x \\ y \\ z \\ 1 \end{pmatrix}, \tag{10}$$

In Equation (10), $H_{3\times4}$ is the camera matrix

$$H_{3\times4} = \begin{pmatrix} h_{11} & h_{12} & h_{13} & h_{14} \\ h_{21} & h_{22} & h_{23} & h_{24} \\ h_{31} & h_{32} & h_{33} & h_{34} \end{pmatrix} . \tag{11}$$

The coordinates x, y, z on the right-hand side of Equation (10) denote coordinates in a world reference frame of the vehicle. The origin of the world reference frame may be located in the road plane, such that points on the road plane have a z-coordinate of 0.

The vector on the left-hand side of Equation (10) includes x' and y', which represent the image plane coordinates when normalized by w' in a conventional manner.

For a point in the road plane, z = 0. Such a point is mapped onto the image plane according to

$$\begin{pmatrix} x' \\ y' \\ w' \end{pmatrix} = H_{3\times4} \begin{pmatrix} x \\ y \\ 0 \\ 1 \end{pmatrix} = H \begin{pmatrix} x \\ y \\ 1 \end{pmatrix}, \tag{12}$$

In Equation (12), *H* denotes the homography matrix which defines a mapping between the road plane and the image plane.

Comparing Equation (12) to Equation (11),

$$H = \begin{pmatrix} h_{11} & h_{12} & h_{14} \\ h_{21} & h_{22} & h_{24} \\ h_{31} & h_{32} & h_{34} \end{pmatrix}. \qquad (13)$$

The matrix elements of the homography matrix depend on intrinsic parameters, such as focal length(s), and extrinsic parameters. The intrinsic parameters are known, for example from an initial calibration of the vehicle vision system.

A line in the road plane is defined by

$$a \cdot x + b \cdot y + c = 0. \qquad (14)$$

Equation (14) is a bilinear equation in the coordinates *x* and *y* in the road plane. The three coefficients *a*, *b* and c define the orientation and position of the line in the road plane. The position of the line may be understood to be a position offset of the line from the origin of the coordinate system measured along the x- or y-axis, i.e. the intersection point of the line with one of the coordinate axes. One of the coefficients *a*, *b* and c may be set to an arbitrary value, owing to the fact that multiplication of Equation (14) by any non-zero number still defines the same line in the road plane.

When the camera does not have non-linear distortions, or after non-linear distortions in the image have been corrected, a line located in the road plane is mapped onto another line in the image plane. This line in the image plane may be described by the bilinear equation

$$a' \cdot x + b' \cdot y + c' = 0. \qquad (15)$$

Equation (15) is a bilinear equation in the coordinates x' and *y'* in the image plane. The three coefficients *a'*, b' and c' define the orientation and position of the line in the image plane. One of the coefficients may be set to an arbitrary value, owing to the fact that multiplication of Equation (15) by any non-zero number still defines the same line in the image plane.

When Equation (15) is the line into which the line defined by Equation (14) is mapped when recording an image, the coefficients *a*, *b*, and c defining the line in the road plane and the coefficients a', b' and c' are interrelated:

$$H^T \begin{pmatrix} a' \\ b' \\ c' \end{pmatrix} = \begin{pmatrix} a \\ b \\ c \end{pmatrix}. \qquad (16)$$

In Equation (16), H denotes the homography matrix defined in Equations (12) and (13). The superscript T denotes matrix transposition. The homography matrix H which defines the mapping between point coordinates in the road plane and image plane in accordance with Equation (12) defines - after transposition - a linear transformation between the 3-tuple of coefficients (a', b', c') and the 3-tuple of coefficients (a, b, c). The 3-tuple of coefficients (a', b', c') is a first set of parameters which defines the orientation and position of the line in the image plane. The 3-tuple of coefficients (a, b, c) is a second set of parameters which defines the orientation and position of the corresponding line in the road plane.

While a mapping between 3-tuples of coefficients of the bilinear equations (14) and (15) is illustrated by Equation (16), there is a wide variety of equivalent formulations. For illustration, the lines in the road plane and in the image plane may respectively also be defined by an angle and an offset value.

According to embodiments, road lane markings are used to determine extrinsic parameters. For a straight road segment, the road lane markings define lines in the road plane and in the image plane. For each one of plural road markings which extend in parallel in the road plane, the parameters defining the line in the image plane and the parameters defining the line in the road plane are determined. Based on Equation (16), extrinsic parameters of the vision system may then be determined using the coefficient vectors on the right-hand side and on the left-hand side of Equation (16).

The number of road lane markings which are used to determine the extrinsic parameters may be selected based on the number of extrinsic parameters which are unknown. A maximum of six extrinsic parameters may need to be determined which define the position and orientation of the camera. If the position of the camera is known, only three extrinsic parameters defining the orientation of the camera may need to be determined. The total count M of road lane markings used in the calibration and the number of extrinsic parameters which are determined may be selected such that

$$M_e \leq 2 \cdot M, \qquad\qquad (9)$$

where $M_e$ is the number of extrinsic parameters of the respective camera which are to be determined. The extrinsic parameters which are to be determined may be selected such that $M_e$ is an even number. For illustration, one coordinate defining the position of the camera and three angular coordinates defining the orientation of the camera may be determined. Then, M may be selected such that $M=M_e/2$.

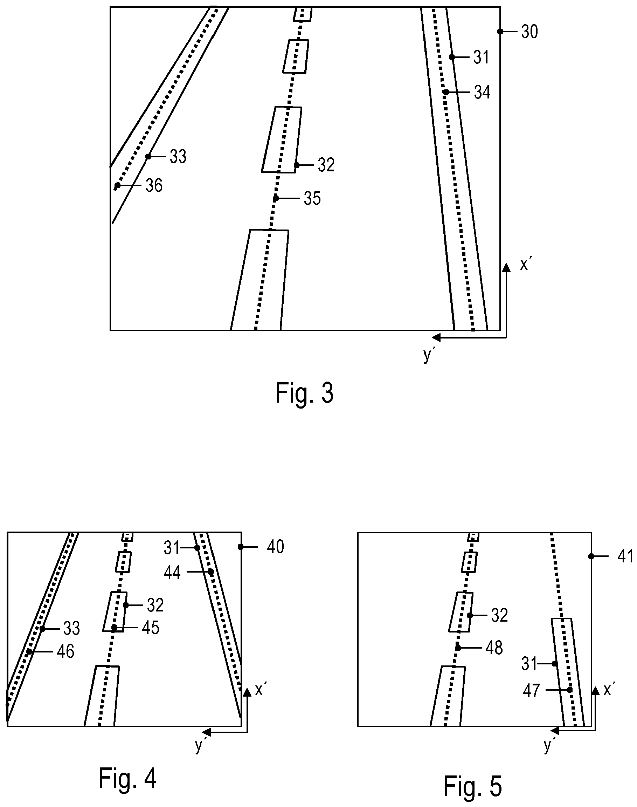

Referring to Figs. 3-6, the determination of the 3-tuples of coefficients (a, b, c) and (a', b', c') will be illustrated.

Fig. 3 is a schematic view of an image 30 captured by a camera. If the camera has optical components which give rise to a non-linear distortion, the image 30 is the image obtained by pre-processing to correct for the non-linear distortion.

Plural road lane markings 31-33 are included in the image. The road lane markings 31 and 33 are continuous. The road lane marking 32 is broken. The road lane markings 31-33 may be readily detected by performing object recognition. For illustration, edge detection schemes may be used.

The road lane marking 31 extends along a line 34 in the image plane. The line 34 may be defined as the longitudinal center line or an edge of the road lane marking 31. The road lane marking 32 extends along a line 35. The line 35 may be defined to be the longitudinal center line or an edge of the road lane marking 32. The road lane marking 33 extends along a line 36. The line 36 may be defined to be the longitudinal center line or an edge of the road lane marking 33.

After image recognition, a first set of parameters defining line 34, another first set of parameters defining line 35, and another first set of parameters defining line 36 may be determined. The first set of parameters may respectively be the coefficients of a bilinear equation in the image space coordinates, as explained with reference to Equation (15).

Fig. 4 shows another image 40 of the road, and Fig. 5 shows yet another image 41 of the road. The determination of a first set of parameters defining a line along which road lane marking 31 extends may be performed for line 34 along which the road lane marking 31 extends in image 30, for line 44 along which the road lane marking 31 extends in image 40, and/or for line 47 along which the road lane marking 31 extends in image 41. The determination of a first set of parameters defining a line along which road lane marking 32 extends may be performed for line 35 along which the road lane marking 32 extends in image 30, for line 45 along which the road lane marking 32 extends in image 40, and/or for line 48 along which the road lane marking 32 extends in image 41. The determination of a first set of parameters defining a line along which road lane marking 33 extends may be performed for line 36 along which the road lane marking 33 extends in image 30 and/or for line 46 along which the road lane marking 33 extends in image 40.

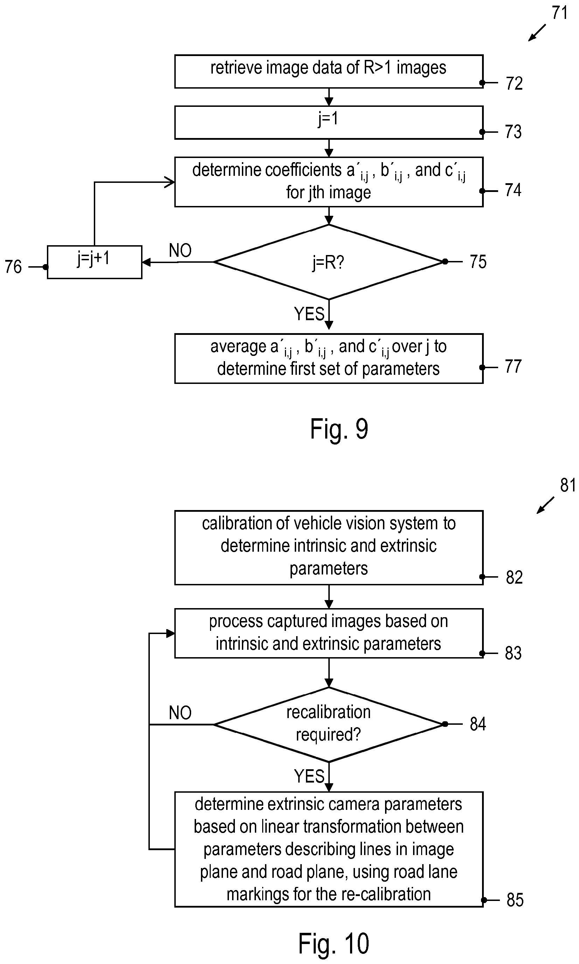

If a road lane marking is included in more than one image, averaging of the determined coefficients may be performed for enhanced robustness of the calibration, as will be described with reference to Fig. 9.

The second set of parameters may be determined based on the width of a road lane or the widths of plural road lanes delimited by the road lane markings. This width(s) define a spacing of road lanes markings in the transverse direction of the road.

For illustration, a scenario will be described in more detail in which the road lanes delimited by the identified plural road lane markings have equal widths. This is the case for adjacent lanes for a driving direction on a highway. This is also the case for a lane provided for one traffic direction and another lane provided for another traffic direction on a road having two lanes only. Different lane widths can be accounted for.

The longitudinal direction of the road along which the vehicle is travelling may be defined to be aligned with one of the coordinate axis of the world coordinate system of the vehicle. Without loss of generality, the direction in which road lane markings extend can be set to be the x-direction. Then, the lines along which the different road lane markings extend are respectively defined by

$$y + (2 \cdot k(i) + 1) \cdot l/2 + s = 0. \qquad\qquad (17)$$

In Equation (17), s denotes an offset of the origin of the vehicle coordinate system from the lane center. This value may be estimated from the captured images. Alternatively, s may also be set equal to zero, thus assuming that the vehicle on average travels along the center of a lane. In Equation (17), l is the width of a road lane. The factor k(i) is an integer which depends on the respective road lane marking. For illustration, for the road lane marking which delimits one side of the lane on which the vehicle is travelling, k(i) = -1. For the road lane marking which delimits the other side of the lane on which the vehicle is travelling, k(i) = 0. A road lane marking delimiting a lane adjacent to the one on which the vehicle is travelling has $k(i) = 1$ or $k(i) = -2$.

The parameter 3-tuple on the right-hand side of Equation (16) can then be written as

$$\lambda_i \begin{pmatrix} 0 \\ 1 \\ -(2 \cdot k(i) + 1) \cdot \frac{l}{2} - s \end{pmatrix}. \tag{18}$$

Here, $\lambda_i$ is an arbitrary non-zero factor, accounting for the fact that the line remains invariant under multiplication of all coefficients with the same non-zero factor. The factor $\lambda_i$ may be selected according to a scaling factor of the parameter 3-tuple on the left-hand side of Equation (16). The factor $\lambda_i$ may be set equal to one.

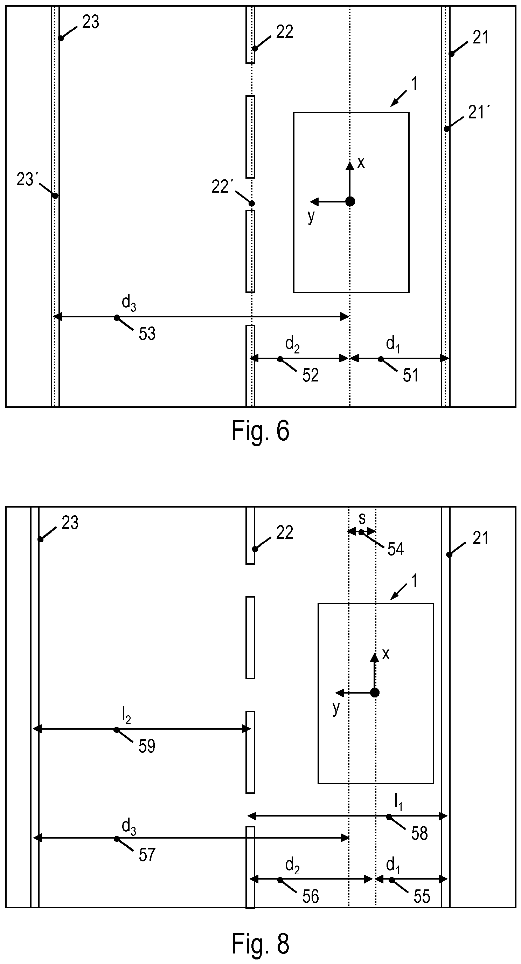

Fig. 6 illustrates parameters of lines along which road lane markings extend. The vehicle 1 is driving along a center of a lane delimited by road lane markings 21 and 22. Without loss of generality, the x-axis is assumed to extend in the longitudinal direction of the road. The line along which the first road lane marking 21 extends is offset from the x-axis by a value $d_1$ shown at 51, which is given by Equation (17) with $k(1) = -1$ and $s = 0$. The line along which the second road lane marking 22 extends is offset from the x-axis by a value $d_2$ shown at 52, which is given by Equation (17) with $k(2) = 0$ and $s = 0$. The line along which the second road lane marking 23 extends is offset from the x-axis by a value $d_3$ shown at 53, which is given by Equation (17) with $k(3) = 1$ and $s = 0$.

Using Equation (16) for the three lines along which the road lane markings extend,

$$\begin{pmatrix} h_{11} & h_{21} & h_{31} \\ h_{12} & h_{22} & h_{32} \\ h_{14} & h_{24} & h_{34} \end{pmatrix} \begin{pmatrix} a'_1 \\ b'_1 \\ c'_1 \end{pmatrix} = \begin{pmatrix} 0 \\ 1 \\ \frac{1}{2} \cdot l \end{pmatrix}, \tag{19}$$

$$\begin{pmatrix} h_{11} & h_{21} & h_{31} \\ h_{12} & h_{22} & h_{32} \\ h_{14} & h_{24} & h_{34} \end{pmatrix} \begin{pmatrix} a'_2 \\ b'_2 \\ c'_2 \end{pmatrix} = \begin{pmatrix} 0 \\ 1 \\ -\frac{1}{2} \cdot l \end{pmatrix}, \tag{20}$$

and

$$\begin{pmatrix} h_{11} & h_{21} & h_{31} \\ h_{12} & h_{22} & h_{32} \\ h_{14} & h_{24} & h_{34} \end{pmatrix} \begin{pmatrix} a'_3 \\ b'_3 \\ c'_3 \end{pmatrix} = \begin{pmatrix} 0 \\ 1 \\ -\frac{3}{2} \cdot l \end{pmatrix}. \tag{21}$$

By expanding Equations (19)-(21), a set of nine equations is obtained. Because multiplication of a column vector which includes the coefficients for a line in the image plane by a non-zero factor leaves this line invariant, and because multiplication of a column vector which includes the coefficients for a line in the road plane by a non-zero factor leaves this line invariant, only six of the nine equations are linearly independent. Up to six extrinsic parameters may be determined from Equations (19)-(21). For illustration, both the position and the orientation of the camera may be obtained by solving Equations (19)-(21) for the extrinsic parameters on which the matrix elements of the homography matrix depend.

If it is not desired to determine all six extrinsic parameters from the linear mapping obtained for at least two road lane markings, the overdetermined set equations may be solved in a conventional way. For illustration,

$$\sum_{i=1}^{M} N \left[ H^T \begin{pmatrix} a'_i \\ b'_i \\ c'_i \end{pmatrix} - \begin{pmatrix} a_i \\ b_i \\ c_i \end{pmatrix} \right] \tag{4}$$

may be minimized, where $N[\cdot]$ denotes a vector norm. When a least squares technique is used,

$$\sum_{i=1}^{M} \left\| H^T \begin{pmatrix} a'_i \\ b'_i \\ c'_i \end{pmatrix} - \begin{pmatrix} a_i \\ b_i \\ c_i \end{pmatrix} \right\|^2 \tag{5}$$

may be minimized. For illustration, if only the orientation of the camera is to be determined, while the camera position is already known, it is sufficient to use two road lane markings (M = 2) and to determine the angles such that Equation (5) becomes minimum.

The way in which the matrix elements of the homography matrix depend on the extrinsic parameters of the camera is known. There is a wide variety of representations for the homography matrix and corresponding possible definitions of extrinsic parameters.

For illustration, the camera matrix H may be defined in terms of successive rotations about z-, y-, and x-axis, followed by a translation and a projection:

$$H_{3 \times 4} = P \cdot T \cdot R_x \cdot R_y \cdot R_z \tag{22}$$

Homogeneous coordinates are used. T, $R_x$, $R_y$ and $R_z$ are matrices having four rows and four columns. T is a translation matrix in homogeneous coordinates. $R_x$, $R_y$ and $R_z$ are rotation matrices in homogeneous coordinates describing rotations around x-, y- and z-axes. P is a projection matrix having three rows and four columns.

In Equation (22), the Tait-Bryan notation is used. The angle for rotation about the z-axis (yaw angle) may be denoted by $\alpha$, the angle for rotation about the y-axis (pitch angle) may be denoted by $\beta$, and the angle for rotation about the x-axis (roll angle) may be denoted by $\gamma$. Then,

$$h_{11} = c_x \cdot \cos\beta \cdot \cos\alpha - f_x \cdot \sin\gamma \cdot \sin\beta \cdot \cos\alpha - f_x \cdot \cos\gamma \cdot \sin\alpha, \tag{23}$$

$$h_{12} = -c_x \cdot \cos\beta \cdot \sin\alpha + f_x \cdot \sin\gamma \cdot \sin\beta \cdot \sin\alpha - f_x \cdot \cos\gamma \cdot \cos\alpha, \tag{24}$$

$$h_{14} = c_x \cdot d_x - f_x \cdot d_y, \tag{25}$$

$$h_{21} = c_y \cdot \cos\beta \cdot \cos\alpha + f_y \cdot \cos\gamma \cdot \sin\beta \cdot \cos\alpha - f_y \cdot \sin\gamma \cdot \sin\alpha, \tag{26}$$

$$h_{22} = -c_y \cdot \cos\beta \cdot \sin\alpha - f_y \cdot \cos\gamma \cdot \sin\beta \cdot \sin\alpha - f_y \cdot \sin\gamma \cdot \cos\alpha, \tag{27}$$

$$h_{24} = c_y \cdot d_x - f_y \cdot d_z, \tag{28}$$

$$h_{31} = \cos\beta \cdot \cos\alpha, \tag{29}$$

$$h_{32} = -\cos\beta \cdot \sin\alpha, \tag{30}$$

and

$$h_{34} = d_x. \tag{31}$$

In Equations (23)-(31), $c_x$ and $c_y$ denote coordinates of the principal point measured relative to a center of the

image plane, and $f_x$ and $f_y$ denote focal lengths. These are intrinsic parameters which are known, for example from an initial calibration. The three angles $\alpha$, $\beta$ and $\gamma$ are rotation angles between the world and camera coordinate systems. The three parameters $d_x$, $d_y$, and $d_z$ are translations between the world and camera coordinate systems in the x-, y- and z-direction.

In embodiments, at least some of the extrinsic parameters are determined based on the linear transformation of Equation (16). In some implementations, all six extrinsic parameters $\alpha$, $\beta$ and $\gamma$ and $d_x$, $d_y$, and $d_z$ may be determined. In other implementations, $d_x$, $d_y$, and $d_z$ are known and only the $\alpha$, $\beta$ and $\gamma$ are determined. Using the determined extrinsic parameters, also the remaining matrix elements $h_{13}$, $h_{23}$ and $h_{33}$ of the full camera matrix, i.e. of the full homography matrix having three rows and four columns, may be determined.

The representation of the homography matrix according to Equation (22) is only one of a variety of representations. For illustration, Euler angles and corresponding rotations may be used instead of the rotations about z-, y-, and x-axes to define the relative orientation between the camera and world coordinate systems.

Fig. 6 is a flow chart of a method 61 performed by the processing unit of the vehicle vision system. In the method 61, extrinsic parameters of the vehicle vision system are determined. The extrinsic parameters include at least an orientation of a camera relative to world coordinates. The extrinsic parameters are determined by the processing unit installed in the vehicle and may be determined while the vehicle is driving.

At 62, if the camera has optical components which give rise to a non-linear distortion, the non-linear distortion is corrected. The non-linear distortion can be corrected based on intrinsic parameters of the camera determined in an initial calibration.

At 63, the image data representing one image or several images captured by the camera are retrieved.

At 64, image recognition is performed to identify plural road lane markings in the image. For further processing, road lane markings are used which extend in parallel in the road plane. Such road lane markings may be identified, for example, based on whether or not they converge towards a common intersection point. A number of the plural road lane markings which are used in the method may be limited based on the number of extrinsic parameters which are to be determined. Alternatively or additionally, a number of the extrinsic parameters which are determined may be modified in dependence on the number of such road lane markings which is available for calibration. For illustration, only the orientation of the camera may be determined if two road lane markings are identified. Both the orientation and the position of the camera may be determined if at least three road lane markings are identified.

At 65, a first set of parameters is determined for each one of the plural road lane markings. The first set of parameters defines the line along which the respective road lane marking extends in the image plane. The first set of parameters may be a 3-tuple of coefficients of an equation which is bilinear in the image plane coordinates. The first set of parameters may respectively include the coefficients of Equation (2).

At 66, a second set of parameters is determined for each one of the plural road lane markings. The second set of parameters defines the line along which the respective road lane marking extends in the road plane. The second set of parameters may be a 3-tuple of coefficients of an equation which is bilinear in world coordinates. The second set of parameters may respectively include the coefficients of Equation (3).

The second set of parameters may be determined based on information on a width of a road lane or on the widths of plural road lanes. The information on road lane widths may be retrieved from a map database of a driver assist system. The road segment on which the vehicle is located may be determined using on a position determination system of the vehicle, in order to determine the road lane widths.

The road lane widths may be determined in any one of a variety of ways. For illustration, if explicit information on road lane widths is stored in a map database, i.e. in the form of width values, this information may be retrieved and used. If no explicit information on road lane widths is stored in the map database, information on a functional road class of the road may be retrieved from the map database. A look-up table specifying road lane widths for various functional road classes may be used to identify the road lane width for the respective road segment. Instead of using a look-up table, other means to associate functional road classes with road lane widths may be used.

At 67, extrinsic parameters of the camera are determined based on a linear transformation which, for all road lane markings for which first and second sets of parameters have been determined, defines a mapping between the first set of parameters and the second set of parameters. The linear transformation may be defined by a matrix including matrix elements of a homography matrix. The matrix elements of the matrix may depend on the extrinsic parameters. The matrix elements may further depend on intrinsic parameters of the camera, which are known.

The extrinsic parameters may be determined using any one of the techniques described with reference to Figs. 1-6.

Varying road widths and/or an offset of the vehicle from the lateral center of a road lane can be accounted for in the calibration method. To this end, the second set of parameters may be determined so as to allow a road lane width to vary from a road lane to another road lane. Alternatively or additionally, the second set of parameters may be determined such that an offset of the vehicle from the lateral center of a road lane can be accounted for.

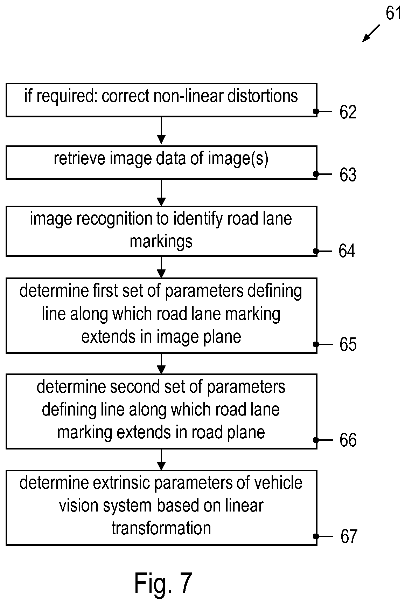

Fig. 8 is a schematic bird view of a vehicle located on a road. Road lane markings 21 and 22 delimit a road lane which has a width $l_1$, shown at 58. Road lane markings 22 and 23 delimit another road lane having another width $l_2$, shown at 59. The center of the vehicle, which defines the origin of the world coordinate system of the vehicle, is offset from the center of the road lane by $s$ indicated at 54.

When the x-axis is assumed to be the axis along which the road lane markings extend, in the second parameter set determined for the road lane marking 21, the road lane marking 22 and the road lane marking 23, $ai = 0$.

The other parameters for the line along which the first road lane marking 21 extends in the road plane may be set to any values $b_1$ and $c_1$ such that

$$c_1/b_1 = l_1/2 - s, \qquad (32)$$

accounting for the fact that the vehicle center is offset towards the road lane marking 21 by $s$. The right-hand side of Equation (32) represents the distance $d_1$ shown at 55.

The other parameters for the line along which the first road lane marking 22 extends in the road plane may be set to any values $b_2$ and $c_2$ such that

$$c_2/b_2 = -l_1/2 - s, \qquad (33)$$

accounting for the fact that the vehicle center is offset away from the road lane marking 22 by $s$. The right-hand side of Equation (33) represents the negative of the distance $d_2$ shown at 56.

The other parameters for the line along which the first road lane marking 23 extends in the road plane may be set to any values $b_3$ and $c_3$ such that

$$c_3/b_3 = -l_2 - l_1/2 - s, \qquad (34)$$

accounting for the fact that the vehicle center is offset away from the road lane marking 23 by $s$ and that the road lane extending between road lane markings 23 and 22 has a width $l_2$ which may be different from the width $l_1$ of the lane extending between road lane markings 22 and 21. The right-hand side of Equation (34) represents the negative of the distance $d_3$ shown at 57.

More than one image captured by the camera may be evaluated to determine the extrinsic parameters in a re-calibration procedure.

In some implementations, tracking may be performed to monitor the position and orientation of a line along which a road lane marking extends in various images captured by the camera in a time-sequential manner.

When a road lane marking is identified in plural images captured in a time-sequential manner while the vehicle travels along the road, averaging of the parameters which define the lines along which the road lane marking extends in the various images may be performed. Robustness of the calibration may be increased.

Fig. 9 is a flow chart of a procedure 71 of determining the first set of parameters for road lane marking(s) which are present in plural images. A count of images is denoted by R. The procedure may be performed by the processing unit of the vehicle vision system. The procedure may be performed to implement steps 63-65 of method 61.

At 72, image data of a plurality of images is retrieved. A number of images is denoted by R.

At 73, an iteration of images is initiated by setting an image identifier j equal to one.

At 74, the coefficients $a'_{i,j}$, $b'_{i,j}$ and $c'_{i,j}$ of a bilinear equation are determined such that the line along which the $i^{th}$ road lane marking extends in the $j^{th}$ image is defined by

$$a'_{i,j} \cdot x' + b'_{i,j} \cdot y' + c'_{i,j} = 0, \qquad (35)$$

where x' and y' denote image plane coordinates.

At 75, it is verified whether the coefficients of the bilinear Equation (35) have already been determined for all images. *If j < R, j* is incremented at 76 and the method returns to 74.

If the coefficients have been determined for all images, the method continues at 77. At 77, the different coefficients obtained for the $i^{th}$ road lane marking in the R images may be combined to determine the first set of parameters for the $i^{th}$ road lane marking. For illustration, averaging may be performed such that

$$a'_i = \sum_{j=1}^{R} a'_{i,j}/R \;, \qquad\qquad (36)$$

$$b'_i = \sum_{j=1}^{R} b'_{i,j}/R, \qquad\qquad (37)$$

and

$$c'_i = \sum_{j=1}^{R} c'_{i,j}/R. \qquad\qquad (38)$$

Weighted averages or other combination techniques may be used.

The thus determined first set of parameters may be used in determining extrinsic parameters of the vehicle vision system, based on the linear transformation, as explained with reference to step 67 of the method 61 of Fig. 7.

Tracking road lane markings in plural images and/or averaging coefficients determined for the lines in different images may be performed for at least one of the road lane marking. The tracking and/or averaging may be performed for each one of the plural road lane markings. The position of the vehicle in which the vehicle vision system is installed shifts relative to the road while the plural images are captured.

Determining extrinsic parameters of a vehicle vision system as described for various embodiments herein may be used to re-calibrate the vehicle vision system during driving operation. This allows changes in the extrinsic parameters which occur over time to be determined and taken into account, for example in driver assist functions. The extrinsic parameters determined using the method of any one embodiment described herein may be used for a variety of purposes, such as controlling the outputting of captured images via an optical output device; determining positions at which information is overlaid on a captured image when outputting the captured image via an optical output device; or other driver assist functions.

Fig. 10 is a flow chart of a method 81 according to an embodiment. The method 81 may be performed by the processing unit of a vehicle vision system.

At 82, an initial calibration of the vehicle vision system is performed. The calibration at 82 may use dedicated markings positioned at pre-defined locations in the world coordinate system of the vehicle. The calibration at 82 does not need to, but may, use road lane markings as markers. In the calibration at 82, both intrinsic and extrinsic parameters may be determined. Examples for an intrinsic parameter include a focal length. The intrinsic parameters may also include plural focal lengths. The intrinsic parameters may also include coordinates of a principal point, defining an offset between the principal point and a center of an electro-optical sensor of the camera.

At 83, captured images are processed during use of the vehicle vision system.

At 84, it is determined whether a recalibration is to be performed. A recalibration may be performed in response to a user command. Alternatively or additionally, a recalibration may be performed automatically when a pre-determined time interval has expired since the preceding calibration. Alternatively or additionally, a recalibration may be performed automatically when it is determined that the processing of images based on the old extrinsic parameters does no longer meet a predetermined quality criterion. In either one of these scenarios, a re-calibration may be initiated only when it is determined that the vehicle is travelling on a road segment for which information on road lane widths is available or derivable, for example because such information is explicitly included in the map database or because it may be derived in other ways.

If it is determined that no recalibration is required, the previous extrinsic parameters continue to be used and the method returns to 83.

If it is determined that a recalibration is required, the method proceeds to 85. At 85, extrinsic parameters are determined using road lane markings as markings. The extrinsic parameters are determined based on a linear transformation which, for all of the plural road lane markings used in the recalibration, defines a mapping between a first set of parameters defining a line along which the road lane marking extends in the image plane and a second set of parameters defining a line along which the road lane marking extends in the road plane.

Methods and vehicle vision systems according to embodiments have been described with reference to the drawings. Modifications and alterations may be implemented in other embodiments.

For illustration, while embodiments have been described in which a line in the road plane or in the image plane is defined by a 3-tuple of coefficients of a bilinear equation, other parameterizations may be used for the lines. For illustration, a line in image plane and/or road plane may be parameterized by an angle defining its orientation and an offset defining its point of intersection with one of the coordinate axes.

For further illustration, while an autonomous determination based only on image parameters in combination with information on road lane widths has been described, additional sensors may be used to provide an estimate for the new extrinsic parameters. The estimate may then be refined using the method of determining extrinsic parameters of an embodiment.

While road lane markings have exemplarily been illustrated as being continuous or broken lines, any type of road lane marking extending along the road may be used. For illustration, also a road lane marking which terminates at a location of the road imaged by the camera defines a line and may thus be used in the method of determining extrinsic parameters. The road lane markings may also be the base end of a wall or of a series of posts positioned as a road lane marking.

Embodiments of the invention may be used in driver assist systems without being limited thereto.

**Claims**

1.  A method of determining extrinsic parameters of a vehicle vision system (2-4), said vehicle vision system (2-4) comprising a camera (2, 3) installed in a vehicle (1), said method comprising:

    processing at least one image (30, 40, 41) of a road (20) captured by said camera (2, 3) to identify plural road lane markings (21-23; 31-33) in said at least one image (30, 40, 41), said plural road lane markings (21-23; 31-33) extending parallel to each other in a road plane;
    determining, for each road lane marking (21-23; 31-33) of said plural road lane markings (21-23; 31-33),

    a first set of parameters defining an orientation and position of a line (34-36; 44-46; 47, 48) along which the road lane marking (21-23; 31-33) extends in an image plane; and
    a second set of parameters defining an orientation and position of a line (21'-23') along which the road lane marking (21-23; 31-33) extends in said road plane,

    **characterized in**
    **that** said second set of parameters being determined based on information on a spacing (58, 59) of said road lane markings (21-23; 31-33) in said road plane; and
    **that** said method further comprises:

    identifying a linear transformation which, for each one of the plural road lane markings (21-23; 31-33), defines a mapping between said first set of parameters and said second set of parameters; and
    establishing said extrinsic parameters based on said identified linear transformation, said established extrinsic parameters defining at least an orientation of a characteristic axis (7) of said camera (2, 3) in a vehicle coordinate system (5) of said vehicle (1).

2.  The method of claim 1,
    wherein identifying said linear transformation comprises determining matrix elements of a homography matrix.

3.  The method of claim 2,
    wherein said matrix elements of said homography matrix are determined such that

    $$H^T \vec{p'}_i$$

    approximates $\bar{p}_i$ for every i = 1, ..., M, wherein i denotes a road lane marking identifier, M denotes a count of said plural road lane markings (21-23; 31-33), H denotes said homography matrix having three rows and three columns, $\bar{p'}_i$ denotes a 3-tuple of said first set of parameters identified for the $i^{th}$ road lane marking, and $\bar{p}_i$ denotes a 3-tuple of said second set of parameters identified for the $i^{th}$ road lane marking.

4.  The method of claim 2 or claim 3,
    wherein determining said first set of parameters respectively includes determining parameter values $a'_i$, $b'_i$ and $c'_i$ such that the line (34-36; 44-46; 47, 48) along which the road lane marking (21-23; 31-33) extends in said image plane is defined by

    $$a'_i \cdot x' + b'_i \cdot y' + c'_i = 0,$$

wherein i denotes a road lane marking identifier and x' and y' denote coordinates in said image plane.

5. The method of claim 4,
   wherein determining said second set of parameters respectively includes determining parameter values $a_i$, $b_i$, and $c_i$ such that the line (21'-23') along which the road lane marking (21-23; 31-33) extends in said road plane is defined by

$$a_i \cdot x + b_i \cdot y + c_i = 0,$$

wherein x and y denote coordinates in said road plane.

6. The method of claim 5,
   wherein said matrix elements of said homography matrix are determined based on

$$N\left[H^T \begin{pmatrix} a'_i \\ b'_i \\ c'_i \end{pmatrix} - \begin{pmatrix} a_i \\ b_i \\ c_i \end{pmatrix}\right]$$

for i=1, ..., M, wherein N[·] denotes a vector norm.

7. The method of claim 5 or claim 6,
   wherein said matrix elements of said homography matrix are determined such that

$$\sum_{i=1}^{M} \left\| H^T \begin{pmatrix} a'_i \\ b'_i \\ c'_i \end{pmatrix} - \begin{pmatrix} a_i \\ b_i \\ c_i \end{pmatrix} \right\|^2$$

is minimized.

8. The method of any one of claims 5-7,
   wherein, for each one of said plural road lane markings (21-23; 31-33), one of said parameter values $a_i$ or $b_i$ is set equal to zero and a quotient of $c_i$ and the other one of said parameter values $a_i$ or bi is set based on said information on said spacing (58, 59) of said road lane markings (21-23; 31-33),
   wherein, for each one of said plural road lane markings (21-23; 31-33), said quotient of $c_i$ and said other one of said parameter values $a_i$ or bi is set equal to

$$(2 \cdot k(i) + 1) \cdot l/2 + s,$$

wherein k(i) denotes an integer number which depends on the road lane marking identifier, *l* denotes a road lane width, and s denotes an offset (54) from a road lane center which is independent on the road lane marking identifier.

9. The method of any one of the preceding claims,
   wherein said plural road lane markings (21-23; 31-33) include at least three road lane markings (21-23; 31-33) which extend parallel to each other in said road plane.

10. The method of any one of the preceding claims,
    wherein a count M of said plural road lane markings (21-23; 31-33) and a count $M_e$ of extrinsic parameters which are to be determined fulfil $M_e \leq 2 \cdot M$.

11. The method of any one of the preceding claims,
    wherein said determining said second set of parameters includes determining a vehicle position and retrieving information on a road lane width (58, 59) from a map database (12) based on said determined vehicle position.

**12.** The method of any one of the preceding claims,
wherein, for at least one of said plural road lane markings (21-23; 31-33), a line (34-36; 44-46; 47, 48) along which the road lane marking (21-23; 31-33) extends in the image plane is respectively determined for plural images (30, 40, 41) of said road (20) captured by said camera (2, 3), and parameters defining orientations and positions of said lines (34-36; 44-46; 47, 48) in said plural images (30, 40, 41) are averaged to determine said first set of parameters.

**13.** A method of processing images captured by a camera (2, 3) of a vehicle vision system (2-4), wherein
extrinsic parameters of said vehicle vision system (2-4) are determined using a method of any one of the preceding claims, and
images captured by said camera (2, 3) are processed based on said determined extrinsic parameters.

**14.** A vehicle vision system, comprising:

a camera (2, 3) having an electro-optical component to capture images (30, 40, 41); and
a processing unit (4) configured to process image data received from said camera (2, 3), said processing unit (4) being configured to:

process at least one image (30, 40, 41) of a road (20) captured by said camera (2, 3) to identify plural road lane markings (21-23; 31-33) in said at least one image (30, 40, 41), said plural road lane markings (21-23; 31-33) extending parallel to each other in a road plane;
to respectively determine, for each road lane marking (21-23; 31-33) of said plural road lane markings (21-23; 31-33),

a first set of parameters defining an orientation and position of a line (34-36; 44-46; 47, 48) along which the road lane marking (21-23; 31-33) extends in an image plane; and
a second set of parameters defining an orientation and position of a line (21'-23') along which the road lane marking (21-23; 31-33) extends in said road plane,

**characterized in that**
said processing unit is configured to
determine said second set of parameters based on information on a spacing (57, 58) of said road lane markings (21-23; 31-33) in said road plane;
identify a linear transformation which, for each one of the plural road lane markings (21-23; 31-33), defines a mapping between said first set of parameters and said second set of parameters; and
establish said extrinsic parameters based on said identified linear transformation, said established extrinsic parameters defining at least an orientation of a characteristic axis (7) of said camera (2, 3) in a vehicle coordinate system (5) of said vehicle (1).

**Patentansprüche**

**1.** Verfahren zum Bestimmen extrinsischer Parameter eines Fahrzeugsichtsystems (2-4), wobei das Fahrzeugsichtsystem (2-4) eine Kamera (2, 3) umfasst, die in einem Fahrzeug (1) installiert ist, wobei das Verfahren folgende Schritte umfasst:

Bearbeiten mindestens eines Bildes (30, 40, 41) einer Straße (20), das von der Kamera (2, 3) aufgenommen wird, um mehrere Fahrspurmarkierungen (21-23; 31-33) in dem mindestens einen Bild (30, 40, 41) zu identifizieren, wobei sich die mehreren Fahrspurmarkierungen (21-23; 31-33) in einer Straßenebene parallel zueinander erstrecken;
Bestimmen, für jede Fahrspurmarkierung (21-23; 31-33) der mehreren Fahrspurmarkierungen (21-23; 31-33),

eines ersten Parametersatzes, der eine Orientierung und eine Position einer Linie (34-36; 44-46; 47, 48) definiert, an der entlang sich die Fahrspurmarkierung (21-23; 31-33) in einer Bildebene erstreckt; und
eines zweiten Parametersatzes, der eine Orientierung und eine Position einer Linie (21'-23') definiert, an der entlang sich die Fahrspurmarkierung (21-23; 31-33) in der Straßenebene erstreckt,

**dadurch gekennzeichnet, dass**
der zweite Parametersatz basierend auf Informationen über einen Abstand (58, 59) der Fahrspurmarkierungen (21-23; 31-33) in der Straßenebene bestimmt wird; und
das Verfahren ferner folgende Schritte umfasst:

Identifizieren einer linearen Transformation, die für jede der mehreren Fahrspurmarkierungen (21-23; 31-33) eine Abbildung zwischen dem ersten Parametersatz und dem zweiten Parametersatz definiert; und
Festlegen der extrinsischen Parameter basierend auf der identifizierten linearen Transformation, wobei die festgelegten extrinsischen Parameter mindestens eine Orientierung einer kennzeichnenden Achse (7) der Kamera (2, 3) in einem Fahrzeugkoordinatensystem (5) des Fahrzeugs (1) definieren.

2. Verfahren nach Anspruch 1, wobei das Identifizieren der linearen Transformation das Bestimmen der Matrixelemente einer homographischen Matrix umfasst.

3. Verfahren nach Anspruch 2, wobei die Matrixelemente der homographischen Matrix derart bestimmt werden, dass $H^T \overline{p'_i}$ für jedes i = 1, ..., M $\overline{p_i}$ nähert, wobei i eine Kennung der Fahrspurmarkierung bezeichnet, M eine Zählung der mehreren Fahrspurmarkierungen (21-23; 31-33) bezeichnet, H die homographische Matrix, die drei Reihen und drei Spalten aufweist, bezeichnet, $\overline{p'_i}$ ein 3-Tuplet des ersten Parametersatzes bezeichnet, das für die i. Fahrspurmarkierung identifiziert wird, und $\overline{p_i}$ ein 3-Tuplet des zweiten Parametersatzes für die i. Fahrspurmarkierung identifiziert.

4. Verfahren nach Anspruch 2 oder 3, wobei das Bestimmen des ersten Parametersatzes jeweils das Bestimmen der Parameterwerte $a'_i$, $b'_i$ und $c'_i$ umfasst, so dass die Linie (34-36; 44-46; 47, 48), an der entlang sich die Fahrspurmarkierung (21-23; 31-33) in der Bildebene erstreckt, durch

$$a'_i \cdot x' + b'_i \cdot y' + c'_i = 0,$$

definiert ist, wobei i eine Kennung der Fahrspurmarkierung bezeichnet, und x' und y' Koordinaten in der Bildebene bezeichnen.

5. Verfahren nach Anspruch 4, wobei das Bestimmen des zweiten Parametersatzes jeweils das Bestimmen der Parameterwerte $a_i$, $b_i$ und $c_i$ umfasst, so dass die Linie (21'-23'), an der entlang sich die Fahrspurmarkierung (21-23; 31-33) in der Straßenebene erstreckt, durch

$$a_i \cdot x + b_i \cdot y + c_i = 0,$$

definiert ist, wobei x und y Koordinaten in der Straßenebene bezeichnen.

6. Verfahren nach Anspruch 5, wobei die Matrixelemente der homographischen Matrix basierend auf

$$N\left[ H^T \begin{pmatrix} a'_i \\ b'_i \\ c'_i \end{pmatrix} - \begin{pmatrix} a_i \\ b_i \\ c_i \end{pmatrix} \right]$$

für i = 1, ..., M bestimmt werden, wobei N[·] einen Betrag des Vektors bezeichnet.

7. Verfahren nach Anspruch 5 oder 6, wobei die Matrixelemente der homographischen Matrix derart bestimmt werden, dass

$$\sum_{i=1}^{M} \left\| H^T \begin{pmatrix} a'_i \\ b'_i \\ c'_i \end{pmatrix} - \begin{pmatrix} a_i \\ b_i \\ c_i \end{pmatrix} \right\|^2$$

minimiert wird.

**8.** Verfahren nach einem der Ansprüche 5 bis 7,
wobei für jede der mehreren Fahrspurmarkierungen (21-23; 31-33) einer der Parameterwerte $a_i$ oder $b_i$ auf null gesetzt wird, und ein Quotient $c_i$ und der andere der Parameterwerte $a_i$ oder $b_i$ basierend auf den Informationen über den Abstand (58, 59) der Fahrspurmarkierungen (21-23; 31-33) eingestellt werden,
wobei für jede der mehreren Fahrspurmarkierungen (21-23; 31-33) der Quotient $c_i$ und der andere der Parameterwerte $a_i$ oder $b_i$ auf

$$(2 \cdot k(i) + 1) \cdot l/2 + s,$$

eingestellt werden, wobei $k(i)$ eine Ganzzahl bezeichnet, die von der Kennung der Fahrspurmarkierung abhängig ist, $l$ die Breite der Fahrspur bezeichnet, und $s$ einen Versatz (54) gegenüber der Fahrspurmitte bezeichnet, der von der Kennung der Fahrspurmarkierung unabhängig ist.

**9.** Verfahren nach einem der vorhergehenden Ansprüche, wobei die mehreren Fahrspurmarkierungen (21-23; 31-33) mindestens drei Fahrspurmarkierungen (21-23; 31-33) umfassen, die sich in der Straßenebene parallel zueinander erstrecken.

**10.** Verfahren nach einem der vorhergehenden Ansprüche, wobei eine Zählung M der mehreren Fahrspurmarkierungen (21-23; 31-33) und eine Zählung $M_e$ von zu bestimmenden extrinsischen Parametern $M_e \leq 2 \cdot M$ erfüllen.

**11.** Verfahren nach einem der vorhergehenden Ansprüche, wobei das Bestimmen des zweiten Parametersatzes das Bestimmen einer Fahrzeugposition und das Abrufen von Informationen über eine Fahrspurbreite (58, 59) aus einer Kartendatenbank (12) basierend auf der bestimmten Fahrzeugposition umfasst.

**12.** Verfahren nach einem der vorhergehenden Ansprüche, wobei für mindestens eine der mehreren Fahrspurmarkierungen (21-23; 31-33) eine Linie (34-36; 44-46; 47, 48), an der entlang sich die Fahrspurmarkierung (21-23; 31-33) in der Bildebene erstreckt, jeweils für mehrere Bilder (30, 40, 41) der Straße (20), die von der Kamera (2, 3) aufgenommen werden, identifiziert wird, und Parameter, welche die Orientierungen und Positionen der Linien (34-36; 44-46; 47, 48) in den mehreren Bildern (30, 40, 41) definieren, gemittelt werden, um den ersten Parametersatz zu bestimmen.

**13.** Verfahren zum Bearbeiten von Bildern, die von einer Kamera (2, 3) eines Fahrzeugsichtsystems (2-4) aufgenommen werden, wobei
extrinsische Parameter des Fahrzeugsichtsystems (2-4) unter Verwendung eines Verfahrens nach einem der vorhergehenden Ansprüche bestimmt werden, und
Bilder, die von der Kamera (2, 3) aufgenommen werden, basierend auf den bestimmten extrinsischen Parametern bearbeitet werden.

**14.** Fahrzeugsichtsystem, umfassend:

eine Kamera (2, 3), die ein elektrooptisches Bauteil aufweist, um Bilder (30, 40, 41) aufzunehmen; und
eine Bearbeitungseinheit (4), die konfiguriert ist, um Bilddaten zu bearbeiten, die von der Kamera (2, 3) empfangen werden, wobei die Bearbeitungseinheit (4) konfiguriert ist zum:

Bearbeiten mindestens eines Bildes (30, 40, 41) einer Straße (20), das von der Kamera (2, 3) aufgenommen wird, um mehrere Fahrspurmarkierungen (21-23; 31-33) in dem mindestens einen Bild (30, 40, 41) zu identifizieren, wobei sich die mehreren Fahrspurmarkierungen (21-23; 31-33) in einer Straßenebene parallel zueinander erstrecken;
Bestimmen jeweils für jede Fahrspurmarkierung (21-23; 31-33) der mehreren Fahrspurmarkierungen (21-23; 31-33)

eines ersten Parametersatzes, der eine Orientierung und eine Position einer Linie (34-36; 44-46; 47, 48) definiert, an der entlang sich die Fahrspurmarkierung (21-23; 31-33) in einer Bildebene erstreckt; und
eines zweiten Parametersatzes, der eine Orientierung und eine Position einer Linie (21'-23') definiert, an der entlang sich die Fahrspurmarkierung (21-23; 31-33) in der Straßenebene erstreckt,

**dadurch gekennzeichnet, dass**
die Verarbeitungseinheit konfiguriert ist zum

Bestimmen des zweiten Parametersatzes basierend auf Informationen über einen Abstand (57, 58) der Fahrspurmarkierungen (21-23; 31-33) in der Straßenebene;
Identifizieren einer linearen Transformation, die für jede der mehreren Fahrspurmarkierungen (21-23; 31-33) eine Abbildung zwischen dem ersten Parametersatz und dem zweiten Parametersatz definiert; und
Festlegen der extrinsischen Parameter basierend auf der identifizierten linearen Transformation, wobei die festgelegten extrinsischen Parameter mindestens eine Orientierung einer kennzeichnenden Achse (7) der Kamera (2, 3) in einem Fahrzeugkoordinatensystem (5) des Fahrzeugs (1) definieren.

**Revendications**

1. Procédé de détermination des paramètres extrinsèques d'un système de vision de véhicule (2 à 4), ledit système de vision de véhicule (2 à 4) comprenant une caméra (2, 3) installée dans un véhicule (1), ledit procédé comprenant les étapes consistant à :

   traiter au moins une image (30, 40, 41) d'une route (20) capturée par ladite caméra (2, 3) pour identifier plusieurs marquages routiers au sol (21-23 ; 31-33) sur ladite au moins une image (30, 40, 41), lesdits plusieurs marquages routiers au sol (21-23 ; 31-33) s'étendant en parallèle les uns aux autres dans un plan de la route ;
   déterminer, pour chaque marquage routier au sol (21-23 ; 31-33) desdits plusieurs marquages routiers au sol (21-23 ; 31-33),

      un premier ensemble de paramètres définissant une orientation et une position d'une ligne (34-36 ; 44-46 ; 47, 48) suivant laquelle s'étend le marquage routier au sol (21-23 ; 31-33) dans un plan de l'image ; et
      un deuxième ensemble de paramètres définissant une orientation et une position d'une ligne (21'-23') suivant laquelle s'étend le marquage routier au sol (21-23 ; 31-33) dans ledit plan de la route,

   **caractérisé en ce que**
   ledit deuxième ensemble de paramètres est déterminé sur la base d'informations concernant un espacement (58, 59) desdits marquages routiers au sol (21-23 ; 31-33) dans ledit plan de la route ; et
   ledit procédé comprend en outre les étapes consistant à :

      identifier une transformation linéaire qui, pour chacun des plusieurs marquages routiers au sol (21-23 ; 31-33), définit une affectation entre ledit premier ensemble de paramètres et ledit deuxième ensemble de paramètres ; et
      établir lesdits paramètres extrinsèques sur la base de ladite transformation linéaire identifiée, lesdits paramètres extrinsèques établis définissant au moins une orientation d'un axe caractéristique (7) de ladite caméra (2, 3) dans un système de coordonnées de véhicule (5) dudit véhicule (1).

2. Procédé selon la revendication 1, dans lequel l'identification de ladite transformation linéaire comprend la détermination des éléments matriciels d'une matrice d'homographie.

3. Procédé selon la revendication 2, dans lequel lesdits éléments matriciels de ladite matrice d'homographie sont déterminés de telle sorte que $H^T \overline{p}'_i$ approche $\overline{p}_i$ pour chaque i = 1, ..., M, où i désigne un identificateur de marquage routier au sol, M désigne un comptage desdits plusieurs marquages routiers au sol (21-23 ; 31-33), H désigne ladite matrice d'homographie comportant trois rangées et trois colonnes, $\overline{p}'_i$ désigne un 3-uplet dudit premier ensemble de paramètres identifié pour le i-ème marquage routier au sol, et $\overline{p}_i$ désigne un 3-uplet dudit deuxième ensemble de paramètres identifié pour le i-ème marquage routier au sol.

4. Procédé selon la revendication 2 ou 3, dans lequel la détermination dudit premier ensemble de paramètres comprend respectivement la détermination des valeurs de paramètres $a'_i$, $b'_i$ et $c'_i$ de telle sorte que la ligne (34-36 ; 44-46 ; 47, 48) suivant laquelle s'étend le marquage routier au sol (21-23 ; 31-33) dans ledit plan de l'image est définie par

$$a'_i \cdot x' + b'_i \cdot y' + c'_i = 0$$

où i désigne un identificateur de marquage routier au sol et x' et y' désignent des coordonnées dans ledit plan de l'image.

5. Procédé selon la revendication 4, dans lequel la détermination dudit deuxième ensemble de paramètres comprend respectivement la détermination des valeurs de paramètres $a_i$, $b_i$ et $c_i$ de sorte que la ligne (21'-23') suivant laquelle s'étend le marquage routier au sol (21-23 ; 31-33) dans ledit plan de la route est définie par

$$a_i \cdot x + b_i \cdot y + c_i = 0,$$

où x et y désignent des coordonnées dans ledit plan de la route.

6. Procédé selon la revendication 5, dans lequel lesdits éléments matriciels de ladite matrice d'homographie sont déterminés sur la base de

$$N\left[ H^T \begin{pmatrix} a'_i \\ b'_i \\ c'_i \end{pmatrix} - \begin{pmatrix} a_i \\ b_i \\ c_i \end{pmatrix} \right]$$

pour i = 1, ..., M, où N[·] désigne une norme du vecteur.

7. Procédé selon la revendication 5 ou 6, dans lequel lesdits éléments matriciels de ladite matrice d'homographie sont déterminés de telle sorte que

$$\sum_{i=1}^{M} \left\| H^T \begin{pmatrix} a'_i \\ b'_i \\ c'_i \end{pmatrix} - \begin{pmatrix} a_i \\ b_i \\ c_i \end{pmatrix} \right\|^2$$

est minimisé.

8. Procédé selon l'une quelconque des revendications 5 à 7,
dans lequel, pour chacun desdits plusieurs marquages routiers au sol (21-23 ; 31-33), l'une desdites valeurs de paramètre $a_i$ ou bi est réglée sur zéro et un quotient de $c_i$ et l'autre desdites valeurs de paramètre $a_i$ ou bi sont réglés sur la base desdites informations concernant ledit espacement (58, 59) desdits marquages routiers au sol (21-23 ; 31-33),
dans lequel, pour chacun desdits plusieurs marquages routiers au sol (21-23 ; 31-33), ledit quotient de $c_i$ et ladite autre desdites valeurs de paramètre $a_i$ ou bi sont réglés sur

$$(2 \cdot k(i) + 1) \cdot 1/2 + s,$$

où k(i) désigne un nombre entier qui dépend de l'identificateur de marquage routier au sol, 1 désigne une largeur de la voie, et s désigne un décalage (54) par rapport à un centre de la voie qui est indépendant de l'identificateur de marquage routier au sol.

9. Procédé selon l'une quelconque des revendications précédentes, dans lequel lesdits plusieurs marquages routiers au sol (21-23 ; 31-33) comprennent au moins trois marquages routiers au sol (21-23 ; 31-33) qui s'étendent en parallèle les uns aux autres dans ledit plan de la route.

**10.** Procédé selon l'une quelconque des revendications précédentes, dans lequel un comptage M desdits plusieurs marquages routiers au sol (21-23 ; 31-33) et un comptage $M_e$ des paramètres extrinsèques à déterminer satisfont $M_e \leq 2 \cdot M$.

**11.** Procédé selon l'une quelconque des revendications précédentes, dans lequel ladite détermination dudit deuxième ensemble de paramètres comprend la détermination d'une position de véhicule et la récupération d'informations concernant une largeur de la voie (58, 59) dans une base de données cartographiques (12) sur la base de ladite position de véhicule déterminée.

**12.** Procédé selon l'une quelconque des revendications précédentes,
dans lequel, pour au moins l'un desdits plusieurs marquages routiers au sol (21-23 ; 31-33), une ligne (34-36 ; 44-46 ; 47, 48) suivant laquelle s'étend le marquage routier au sol (21-23 ; 31-33) dans le plan de l'image est respectivement déterminée pour plusieurs images (30, 40, 41) de ladite route (20) capturées par ladite caméra (2, 3), et la moyenne des paramètres définissant les orientations et positions desdites lignes (34-36 ; 44-46 ; 47, 48) sur lesdites plusieurs images (30, 40, 41) est calculée pour déterminer ledit premier ensemble de paramètres.

**13.** Procédé de traitement d'images capturées par une caméra (2, 3) d'un système de vision de véhicule (2 à 4), dans lequel
des paramètres extrinsèques dudit système de vision de véhicule (2 à 4) sont déterminés en utilisant un procédé selon l'une quelconque des revendications précédentes, et
des images capturées par ladite caméra (2, 3) sont traitées sur la base desdits paramètres extrinsèques déterminés.

**14.** Système de vision de véhicule, comprenant :

une caméra (2, 3) présentant un composant électro-optique pour capturer des images (30, 40, 41) ; et
une unité de traitement (4) configurée pour traiter des données d'image reçues de ladite caméra (2, 3), ladite unité de traitement (4) étant configurée pour :

traiter au moins une image (30, 40, 41) d'une route (20) capturée par ladite caméra (2, 3) pour identifier plusieurs marquages routiers au sol (21-23 ; 31-33) sur ladite au moins une image (30, 40, 41), lesdits plusieurs marquages routiers au sol (21-23 ; 31-33) s'étendant en parallèle les uns aux autres dans un plan de la route ;
déterminer respectivement pour chaque marquage routier au sol (21-23 ; 31-33) desdits plusieurs marquages routiers au sol (21-23 ; 31-33),

un premier ensemble de paramètres définissant une orientation et une position d'une ligne (34-36 ; 44-46 ; 47, 48) suivant laquelle s'étend le marquage routier au sol (21-23 ; 31-33) dans un plan de l'image ; et
un deuxième ensemble de paramètres définissant une orientation et une position d'une ligne (21'-23') suivant laquelle s'étend le marquage routier au sol (21-23 ; 31-33) dans ledit plan de la route, **caractérisé en ce que**

ladite unité de traitement est configurée pour

déterminer ledit deuxième ensemble de paramètres sur la base des informations sur un espacement (57, 58) desdits marquages routiers au sol (21-23 ; 31-33) dans ledit plan de la route ;
identifier une transformation linéaire qui, pour chacun des plusieurs marquages routiers au sol (21-23 ; 31-33), définit une affectation entre ledit premier ensemble de paramètres et ledit deuxième ensemble de paramètres ; et
établir lesdits paramètres extrinsèques sur la base de ladite transformation linéaire identifiée, lesdits paramètres extrinsèques établis définissant au moins une orientation d'un axe caractéristique (7) de ladite caméra (2, 3) dans un système de coordonnées de véhicule (5) dudit véhicule (1).

23

Fig. 1

Fig. 2

Fig. 3

Fig. 4

Fig. 5

Fig. 6

Fig. 8

61

| if required: correct non-linear distortions | — 62 |

↓

| retrieve image data of image(s) | — 63 |

↓

| image recognition to identify road lane markings | — 64 |

↓

| determine first set of parameters defining line along which road lane marking extends in image plane | — 65 |

↓

| determine second set of parameters defining line along which road lane marking extends in road plane | — 66 |

↓

| determine extrinsic parameters of vehicle vision system based on linear transformation | — 67 |

Fig. 7

71

retrieve image data of R>1 images — 72

j=1 — 73

determine coefficients $a'_{i,j}$, $b'_{i,j}$, and $c'_{i,j}$ for jth image — 74

76 — j=j+1 ← NO — j=R? — 75

YES

average $a'_{i,j}$, $b'_{i,j}$, and $c'_{i,j}$ over j to determine first set of parameters — 77

Fig. 9

81

calibration of vehicle vision system to determine intrinsic and extrinsic parameters — 82

process captured images based on intrinsic and extrinsic parameters — 83

NO ← recalibration required? — 84

YES

determine extrinsic camera parameters based on linear transformation between parameters describing lines in image plane and road plane, using road lane markings for the re-calibration — 85

Fig. 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **S. VACEK et al.** Road-marking analysis for autonomous vehicle guidance. *Proceedings of the 3rd European Conference on Mobile Robots, EMCR 2007,* 19 September 2007
- A volumetric multi-cameras method dedicated to road traffic monitoring. **J. DOURET ; R. BENOSMAN.** 2004 IEEE Intelligent Vehicles Symposium, 2004. IEEE, 14 June 2004, 442-446
- **K. WANG et al.** Research on lane-marking line based camera calibration. *IEEE International Conference on Vehicular Electronics and Safety, 2007,* 13 December 2007, 1-6